# EUROPÄISCHE PATENTSCHRIFT

(11) **EP 0 732 760 B1**
(45) Veröffentlichungstag und Bekanntmachung des Hinweises auf die Patenterteilung: **30.06.1999**
(21) Anmeldenummer: 96101880.1
(22) Anmeldetag: 09.02.1996
(51) Int. Cl.: H01M 4/04, H01M 4/88, B01J 31/02, B01J 35/00, H01M 4/58

(54) **Verfahren zur Herstellung eines Ladungsaustauschkörpers mit grosser aktiver Oberfläche sowie Verwendung des Ladungsaustauschkörpers**
Process of production of a charge-exchanger body having a high active surface area and use of the charge-exchanger body
Procédé de fabrication d'un corps échangeur de charge ayant une grande surface active et utilisation du corps échangeur de charge

(30) Priorität: 14.03.1995 DE 19509074
(43) Veröffentlichungstag der Anmeldung: 18.09.1996
(73) Patentinhaber: DaimlerChrysler AG, 70567 Stuttgart (DE)
(72) Erfinder: Maly-Schreiber, Martha, Dr., D-89075 Ulm (DE); van Zyl, Arnold, Dr., D-89073 Ulm (DE); Ritter, Josef, D-80339 München (DE); Hilpert, Reinhold, Dr., D-82272 Moorenweis (DE)

(56) Entgegenhaltungen:
- US-A- 5 147 841

## Beschreibung

Die Erfindung betrifft ein Verfahren zur Herstellung eines Ladungsaustauschkörper mit großer aktiver Oberfläche gemäß dem Oberbegriff des Anspruchs 1 sowie die Verwendung des Ladungsaustauschkörpers, wie es bei der Herstellung von auf einem auf Ladungsaustausch basierenden Katalysatoren oder von Elektroden in der Batterietechnik eingesetzt und hier als bekannt unterstellt wird.

Da sich das Prinzip des Ladungsaustausches für Elektroden und die hier angesprochenen Katalysatoren gleicht, wird im folgenden der Ladungsaustauschkörper nur anhand einer Elektrode eines elektrochemischen Speichers beschrieben. In der Batterietechnik ist es bekannt, in Einzelzellen elektrochemischer Speicher Elektroden zu verwenden, die ein poröses Stützgerüst aufweisen. Die porösen Stützgerüste können bei Elektroden von dem Elektrolyten durchdrungen werden, so daß für den den Strom bedingenden Elektronenaustausch an den Elektroden einer gegenüber der Fläche der Elektrode größere aktive Oberfläche für den Ladungsaustausch zur Verfügung steht. Die aktive Oberfläche für den Ladungsaustausch von Ionen und/oder Elektronen hängt von der Art der Reaktion des Gerüstmaterials des Stützkörpers der Elektrode sowie von den elektrischen Eigenschaften der Reaktionspartner ab. Unter der Voraussetzung, daß das Material der Elektrode eine genügende elektrische Leitfähigkeit aufweist, kann im allgemeinen gesagt werden, daß bei Elektroden vom Einlagerungstyp die aktive Oberfläche für den Ladungsaustausch durch die wahre Grenzfläche zwischen dem Gerüstmaterial und dem Elektrolyt dargestellt wird.

Bei Elektroden mit Verdrängungsreaktionen weisen die Reaktionspartner oft elektronische isolierende Eigenschaften auf, weshalb die Anlieferung und Ablieferung durch einen zusätzlichen Stoff mit guter elektrischer Leitfähigkeit, wie Kohle- und/oder Metallpulver, das zusätzlich dem Gerüstmaterial, welchen dann ein 2-Phasen-Gemisch ist, beigefügt wird, verbessert werden muß. In einer solchen Konfiguration wird die aktive Oberfläche für den Ladungsaustausch durch die Grenzfläche der 3-Phasen Elektrolyt/Elektrode/elektrischer Leiter bestimmt.

Dies hat zur Folge, daß ein hoher Prozentsatz der Masse des Gerüstmaterials für den Elektronenaustausch nicht unmittelbar zur Verfügung steht und sich in Abhängigkeit des Ladungszustandes stark verändert. Da es in der Batterietechnik ein grundsätzliches Anliegen ist, die gewichts- und/oder raumbezogene Leistungsfähigkeit der Einzelzellen bzw. der elektrochemischen Speicher zu erhöhen, sind die aufgeführten Punkte von besonderer Wichtigkeit.

Die Aufgabe der Erfindung ist es, das gattungsgemäß zugrundegelegte Verfahren dahingehend weiterzuentwickeln, daß die Leistungsfähigkeit eines Ladungsaustauschkörpers erhöht ist, wobei das poröse Stützgerüst des Ladungsaustauschkörpers möglichst innerhalb geringer Toleranzen herstellbar sein soll.

Die Aufgabe wird bei einem gattungsgemäß zugrundegelegten Verfahren mit den kennzeichnenden Verfahrensschritten des Anspruchs 1 gelöst. Durch die gezielte Gestaltung der aktiven Oberfläche für den elektrochemischen Ladungsaustausch kann bei geringen Herstellungstoleranzen die Leistungsfähigkeit des Ladungsaustauschkörpers erhöht werden. Eine Besonderheit der Erfindung ist u.a. darin zu sehen, daß die funktionellen Zentren des Stützgerüsts des Ladungsaustauschkörpers im Submikronbereich gezielt gestaltet und eingefroren werden, so daß zu allen Zeiten der Ladung und der Entladung ähnliche Verhältnisse für den elektrochemischen Ladungsaustausch vorliegen.

In besonderen Fällen handelt es sich bei dem Gerüstmaterial um einen Funktionswerkstoff, dessen Funktionalität durch die gezielte Anordnung bzw. Verankerung zweier in ihren Eigenschaften unterschiedlicher Phasen erreicht wird. Solche Funktionswerkstoffe spielen insbesondere in der Katalyse, wo lokal Ladungsträger transferiert werden, eine bedeutende Rolle.

Zweckmäßige Ausgestaltungen der Erfindung sind den Unteransprüchen entnehmbar. Im übrigen wird die Erfindung anhand von in den Figuren dargestellten Ausführungsbeispielen erläutert, wobei als Ausführungsbeispiele für den Ladungsaustauschkörper Elektroden elektrochemischer Speicher aufgeführt sind. Dabei zeigt
- Fig. 1: einen Ausschnitt aus einem elektrochemischen Speicher mit mehreren Einzelzellen,
- Fig. 2: einen Ausschnitt einer mit Körnern aus Gerüstmaterial gefertigten Elektrode einer Einzelzelle,
- Fig. 3: eine schematische Darstellung einer Dispersion mit flüssiger Phase und mit Lipiden,
- Fig. 4: die Dispersion nach Figur 3 mit einem aus den Lipiden gebildeten Vesikel,
- Fig. 5: das Vesikel nach Figur 4 mit in seinem Hohlraum angeordneten Korn aus Gerüstmaterial und
- Fig. 6: ein Korn, bei dem die Hülle des Vesikels nach Figur 5 entfernt wurde.

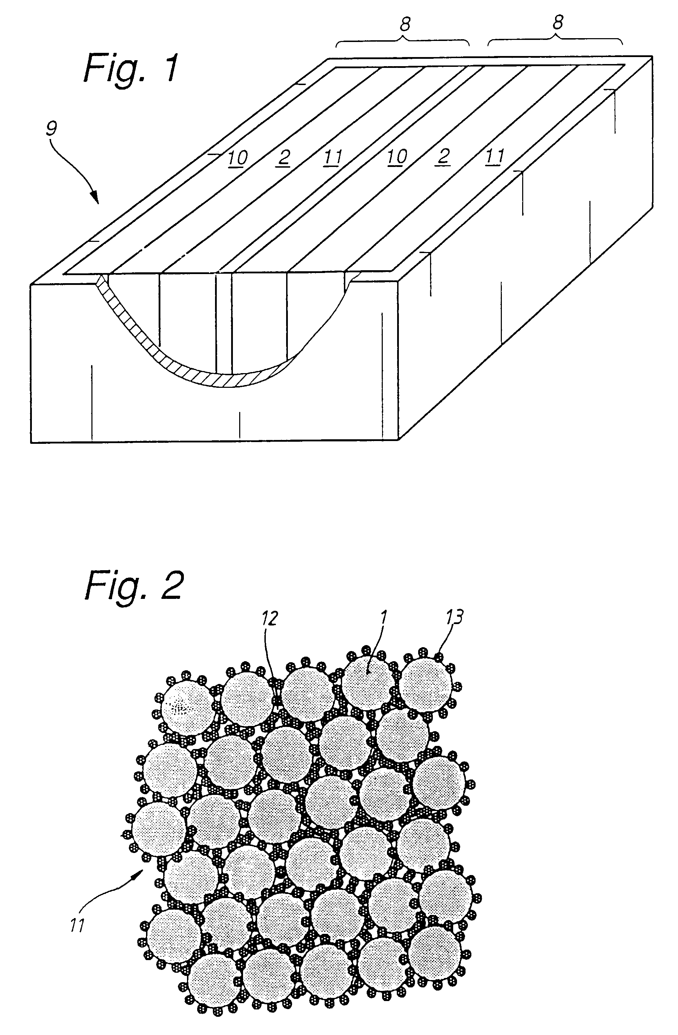

In Figur 1 ist eine Einzelzelle 8 in Plattenbauweise eines elektrochemischen Speichers 9 dargestellt, wie sie bspw. in Batterien, Akkumulatoren und dergleichen verwendbar ist. Die Erfindung ist nicht auf Elektroden derartiger Einzelzellen 8 beschränkt, sondern in einfacher Weise auch auf andere Batterien, bspw. mit geschichteten oder gewickelten Elektroden 10, 11 und dgl. sowie auf Katalysatoren von Ladungsaustauschtyp übertragbar. Beim vorliegenden Ausführungsbeispiel entsprechen die Elektroden 10, 11 dem Ladungsaustauschkörper, welche ein aus Körnern 1 aus Gerüstmaterial gebildetes Stützgerüst aufweisen.

Die Einzelzelle 8 nach Figur 1 weist u.a. zwei ungleichnamige und räumlich voneinander getrennte Elektroden 10, 11 auf, zwischen die sinnvollerweise ein Schutzelement 2 einer Einzelzelle 8 eingelegt ist. Zur Sicherung der Einzelzelle 8 weist das Schutzelement 2 spätestens bei einer Schaltschwelle, die maximal einer Durchbruchs- bzw. Zerstörungsspannung einer Einzelzelle 8 entspricht, eine gute elektrische Leitfähigkeit auf, so daß ab der Schaltschwelle die beiden Elektroden 10, 11 über das Schutzelement 2 elektrisch leitend verbunden sind. Unterhalb der Schaltschwelle, also bei Betriebsspannung, stellt das Schutzelement 2 einen Isolator dar. Als Schaltschwelle wird hierbei diejenige Spannung bezeichnet, die maximal gleich der Zerstörungsspannung der Einzelzelle 8 ist und bei der sich der Widerstand des Schutzelements 2 von hochohmigen Werten, also von einem elektrisch isolierenden Zustand, hin zu niederohmigen Werten, also zu einem elektrisch leitenden Zustand, ändert. Damit an den Elektroden 10, 11 der Einzelzelle 8 im Betrieb und damit bei isolierendem Zustand des Schutzelements 2 eine elektrische Spannung abgegriffen werden kann, ist das poröse Schutzelement 2 zumindest teilweise mit dem Elektrolyt der Einzelzelle 8 befüllt.

Durch diese Konstruktion ist es auf einfache Weise möglich, ohne zusätzliches Bauteil einen Zerstörungs- bzw. Überladungsschutz für Einzelzellen 8 zu realisieren, da das Schutzelement 2 unterhalb seiner Schaltschwelle hochohmig ist und daher gleichzeitig auch als ein die Elektroden 10, 11 räumlich trennender Separator verwandt werden kann.

In Figur 2 ist ein vergrößerter Ausschnitt der Elektrode 10, 11 für die Einzelzelle 8 nach Figur 1 dargestellt. Wie schon erwähnt, entspricht dieser Ausschnitt des Aufbaus der Elektrode dem prinzipiellen Aufbau eines Ladungsaustauschkörpers, so daß dieser Aufbau auch in einfacher Weise auf einen Katalysator von Ladungsaustauschtyp übertragen werden kann. Um unnötige Wiederholungen zu vermeide, wird daher in dem vorliegenden Schriftsatz nur auf eine prinzipiell baugleich Elektrode 10, 11 eingegangen.

Die Elektrode 10, 11 ist aus einzelnen, insbesondere etwa kugelförmigen Körnern 1 des Gerüstmaterials aufgebaut, die an ihren Kontaktflächen miteinander verbunden sind. Die Verbindung kann bspw. durch Sintern erfolgen. Eine weitere zweckmäßige Möglichkeit der Verbindung der Körner 1 ist es, die Körner 1 miteinander zu verkleben, wobei der zuhilfegenommene Kleber günstigerweise elektrisch leitend ist. Als Material für einen Kleber oder Verbinder ist hier insbesondere Kupfer geeignet.

Sinnvollerweise weisen die Körner 1 an ihrer Oberfläche eine Substanz 13 auf, deren spezifische elektrische Leitfähigkeit größer als die Leitfähigkeit des Gerüstmaterials ist. Dadurch ergibt sich insbesondere eine gute Ableitung des Stromes an den Elektroden.

Der mittlere Durchmesser der Körner 1 des Gerüstmaterials ist kleiner als 1µm, insbesondere kleiner als 250 nm, wobei von der Gesamtheit aller Körner 1 des Gerüstmaterials zumindest 60 % von ihnen innerhalb eines Intervalls angeordnet sind, das um maximal 40% von ihrem statistischen Mittelwert abweicht. Günstiger ist es, wenn die Körner 1 bzgl. Ihres Volumens um maximal 10% voneinander abweichen.

Aufgrund der sich etwa entsprechenden Maße und der Gestalt der annähernd eine Kugelform aufweisenden Körner 1, können sich die Körner 1 vor dem Verbinden miteinander in einer dichtesten Kugelpackung, der sogenannten kubisch raumzentrierten Kugelpackung anordnen, wie es in der Figur 2 mit zwei übereinanderliegenden Schichten von Körnern 1 in Aufsicht idealisiert dargestellt ist.

Dies bedeutet für einen Ladungsaustauschkörper wie die Elektrode 10, 11, daß hier in einer aus der Kristallphysik abstrahierend entnommenen Einheitszelle - die im kristallphysikalischen Modell einer Einheitszelle kugelförmig postulierten Atome der Einheitszelle sind einfach mit den zumindest in grober Näherung kugelförmigen Körnern 1 des Gerüstmaterials zu vertauschen, wobei dann durch ein periodisches Aneinanderreihen der abstrahierten Einheitszelle 8 die mikroskopische Struktur der Elektrode 10, 11 darstellbar ist - immer ein in engen Grenzen definierter Hohlraum 12 und ebenso eine definierte freie Oberfläche und damit auch eine definierte Kontaktoberfläche zwischen einzelnen Körnern 1 vorliegt.

Das Vorliegen einer derartigen Einheitszelle 8 bei dem Aufbau u.a. der Elektrode 10, 11 ist u.a. daher günstig, da die Kontaktoberfläche der Körner 1 untereinander einen mathematisch erfaßbaren Zusammenhang aufweist und dadurch bei gewollter Kapazität und vorgegebener Schichtdicke der Elektroden 10, 11 die Größe der Körner 1 auf einfache Weise rechnerisch ermittelbar ist. Dadurch ist die Herstellung von erfindungsgemäßen Ladungsaustauschkörpern - im vorliegenden Fall von Elektroden 10, 11 - und in engen Grenzen, mit hoher Reproduzierbarkeit und dadurch geringem Ausschuß realisiert.

Insbesondere ist hierbei noch von Vorteil, daß aufgrund der geringen Korngröße der Körner 1 die Elektrode 10, 11 mit einer geringen Dicke hergestellt werden kann. Dies führt zu kleineren Außenmaßen eines elektrochemischen Speichers 9, da die Elektrode 10, 11 in der vorliegenden Konstruktion der Einzelzelle 8 zur Breite der Einzelzelle 8 und dadurch bei elektrochemischen Speichern 9 mit mehreren Einzelzellen 8 auch entsprechend zur Gesamtbreite des elektrochemischen Speichers 9 beiträgt.

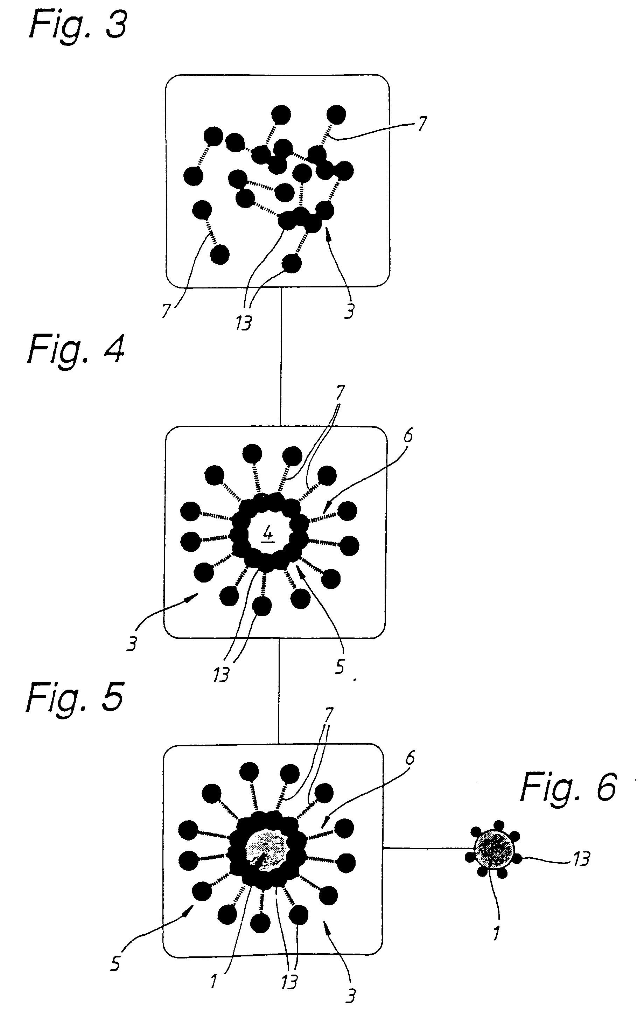

Im folgenden wird anhand der Figuren 3 bis 6 auf den prinzipiellen Ablauf des Verfahren zur Herstellung erfindungsgemäßer Ladungsaustauschkörpern wie Elektroden 10, 11 oder Katalysatoren vom Ladungsaustauschtyp eingegangen.

In Figur 3 ist eine Dispersion 3 dargestellt, die insbesondere aus einem Lösungsmittel und amphiphilen, organischen Molekülen 7 gebildet ist, wobei die Moleküle 7 in dem Lösungsmittel statistisch verteilt sind. Als Moleküle 7 werden zweckmäßigerweise Lipide und/oder Proteine, insbesondere Phospholipide, verwandt. In dem Lösungsmittel, das ja die flüssige Phase der Dispersion 3 darstellt, wird solange ein beim Lösen in dem Lösungsmittel Gerüst ionen bildendes Salz beigegeben, bis die Konzentration der nun als Salzlösung vorliegende flüssige Phase der entstehenden Dispersion 3 mindestens 0,1 M bis zur Sättigung beträgt.

Als Salz wird ein Salz verwandt, das das Gerüstion insbesondere als Kation aufweist. Die zur Bildung des Gerüstmaterials benötigten Gerüstionen können ein chemisches Element des Periodensystems und/oder eine entsprechende ionisierte Substanz bzw. Verbindung sein.

Wird die salzhaltige Dispersion 3, wie in Figur 4 dargestellt, stärkerem Ultraschall ausgesetzt, so bilden sich aus den Molekülen 7 kugelförmige biochemische Hohlkörper, insbesondere in Form von Vesikeln 5, die von einer als doppellagigen Membran ausgebildeten Hülle 6 begrenzt sind. Die Hülle 6 ist aus den Molekülen 7 gebildet. Innerhalb der Hülle 6 weisen die Vesikel 5 einen Hohlraum 4 auf, in dem Teile der flüssigen Phase der Dispersion 3 eingeschlossen sind. Die Vesikel 5 bilden sich mit einem etwa gleichen, einstellbaren und dadurch bekannten Innendurchmesser, so daß der von der Hülle 6 umschlossene Hohlraum 4 der Vesikel 5 den maximalen Durchmesser der späteren Körner 1, wie sie in Figur 6 dargestellt sind, festlegt. Die Größe der Hohlräume 4 ist durch die Randbedingungen und hierbei insbesondere durch die Wahl der Moleküle 7 einstellbar.

Zur Herstellung der Vesikel 5 kann auch eine sogenannte "French Press", insbesondere in einer Ausführung bei der die Dispersion unter hohem Druck durch einen feinporigen Filter gepreßt wird, verwendet werden.

Nach Bildung der Vesikel 5 werden der flüssigen Phase der Dispersion 3 die Gerüstionen bspw. mittels einer Ionenaustauschsäule entzogen. Trotz des sich daraufhin einstellenden und eine Diffusion fördernden Konzentrationsgefälles (hohe Konzentration von Gerüstionen innerhalb der Hohlräume 4 der Vesikel 5 und vernachlässigbare bis keine Konzentration von Gerüstionen außerhalb der Hohlräume 4) verbleiben hierbei die kationischen Gerüstionen in den Hohlräumen 4, da sie die als doppellagige Membran ausgebildete Hülle 6 nicht durchdringen können.

Nach der Entfernung der Gerüstionen werden der außerhalb der Hohlräume 4 befindlichen gerüstionenfreien flüssigen Phase der Dispersion 3 Anionen beigegeben. Die Anionen durchdringen die Hülle 6 der Vesikel 5 und reagieren nach erfolgter Diffusion in den jeweiligen Hohlräumen 4 der Vesikel 5 mit den darin befindlichen Gerüstionen. Das Produkt dieser Reaktion ist das Gerüstmaterial (siehe Figur 5) oder ein Vorprodukt des Gerüstmaterials, das in diesem Fall anschließend noch in das Gerüstmaterial überführt werden muß. Derartige Vorprodukte können bspw. Hydroxide sein, die noch durch geeignete und bekannte Verfahren wie Calzinieren oder dgl. in Oxide überführt werden müssen.

Damit die Elektrode 10, 11 eine gute Ableiteigenschaft des Stromes aufweist, werden zur Bildung der Körner 1 des Gerüstmaterials Vesikel 5 bildende Moleküle 7 eingesetzt, die jeweils eine elektrisch leitfähige Substanz 13 enthalten, wobei die höhere elektrische Leitfähigkeit der verbleibenden Substanz 13 größer als der entsprechende Leitwert des Gerüstmaterial ist. Die Substanz 13 verbleibt bei und nach der Entfernung der Hüllen 6 der Vesikel 5 an den Körnern 1 aus Gerüstmaterial bzw. an der Oberfläche der entsprechenden Vorprodukte, wodurch sie eine gute elektrische Verbindung zwischen den einzelnen Körnern 1 aufweisen.

Sinnvollerweise erfolgt die Umwandlung des Vorprodukts in das Gerüstmaterial gleichzeitig mit dem Entfernen der Hülle 6 des Vesikels 5, das insbesondere thermisch vorgenommen werden kann. Bei dem thermischen Entfernen wird hierzu die Temperatur derart eingestellt, daß gleichzeitig mit der Entfernung der Hülle 6 eines Vesikels 5 das im Hohlraum 4 befindliche Vorprodukt calziniert wird und nur ein Korn 1 des Gerüstmaterials zurückbleibt.

Die Hüllen 6 der Vesikel können auch auf schonende Weise entfernt werden, insbesondere durch ein geeignetes Lösungsmittel. Hierbei ist vor allem von Vorteil, daß dann die Moleküle 7 einer Wiederverwendung zugeführt werden können.

Die gewonnen Körner 1 sind sich in den oben aufgeführten Grenzen ähnlich. Zur Formgebung der Elektrode 10, 11 werden die Körner 1 in eine Form überführt und entsprechend der Gestaltung der Elektrode 10, 11 miteinander verbunden. Diese Verbindung kann insbesondere durch einen Kleber erfolgen, der eine gute elektrische Leitfähigkeit aufweist. Zweckmäßigerweise wird als Binder bzw. als Kleber Kupfer verwandt.

Eine weitere Möglichkeit ist es, die Körner 1 in Form der späteren Elektrode 10, 11 zu Sintern, wobei dies vorzugsweise unter Druck erfolgt. Das Sintern bietet hierbei den Vorteil, daß durch den thermischen Einfluß beim Sintern Fremdstoffe entfernt werden können. Insbesondere kann beim Vorliegen von Körnern 1 aus einem Vorprodukt des Gerüstmaterials die thermische Einwirkung beim Sintern gleichzeitig zum Umwandeln des Vorproduktes in das Gerüstmaterial verwandt werden.

Im folgenden wird die Herstellung von LiMnO4-Kathode 11 als Ladungsaustauschkörper beschrieben. Zur Herstellung der Kathode 11 werden unter Bildung einer Dispersion 3 einer zumindest teilweise als Lösungsmittel wirkenden Flüssigkeit LiNO3, Mn(NO3)2 und Lipide beigegeben. Die Dispersion 3 wird mit Ultraschall beaufschlagt, wodurch sich aus den Lipiden Vesikel 5 bilden, deren Innendurchmesser ihres Hohlraums 4 zwischen etwa 10 nm bis 500 nm einstellbar ist. Mit der Vesikel 5 aufweisende Dispersion 3 wird anschließend eine Hydrolyse durchgeführt, wodurch im Hohlraum 4 der Vesikel 5 Li-Mn-Hydroxid ausfällt. Nach Abschluß dieser Reaktion in den Hohlräumen 4 der Vesikel 5 wird die Dispersion 3 unter Entfernung der Hüllen 6 der Vesikel 5 calziniert. Nach der Calzinierung liegen Körner 1 aus LiMnO4 mit definierter Korngröße vor, die unter Zuhilfenahme von bspw. Kupfer als Binder zur Kathode 11 geformt werden.

Als Salzkombination empfiehlt es sich, leicht lösliche Salze zur Herstellung der salzartigen Dispersion 3 zu verwenden. Die Einstrahlung bzw. Beschallung erfolgt günstigerweise im Bereich von 20 kHz, wobei die Schallintensität derart gering sein kann, daß sie praktisch nicht meßbar ist. Das Präzipitat wird durch Fällung der sich nach der Bildung der Vesikel 5 im Hohlraum 4 befindlichen Dispersion 3 mit einer Lösung eines Anions, das mit dem Varistorion einen schwerlöslichen Niederschlag bildet, erreicht.

Anstelle des Herstellungsbeispieles unter Zuhilfenahme von Vesikeln können auch andere biochemische Hohlräume wie Micellen, Mikroemulsionen, Ferritin und dgl. verwendet werden, wobei der Prozeß der Bildung der Körner im Inneren der biochemikalischen Hohlräume unter Zuhilfenahme der Osmose und des pH-Gefälles sowie der Entfernung der Hülle biochemikalischen Hohlräume analog ist, weshalb hier, um unnötige Wiederholungen zu vermeiden, auf ein näheres eingehen darauf verzichtet wird.

## Patentansprüche

1. Verfahren zur Herstellung eines Ladungsaustauschkörpers, wie Elektroden oder Katalysatoren, mit einer gegenüber der Außenoberfläche des Ladungsaustauschkörpers größeren aktiven Oberfläche, bei welchem Verfahren Körner aus einem zur Bildung eines Stützgerüsts geeigneten Gerüstmaterials hergestellt und zu dem Stützgerüst verbunden werden,
**dadurch gekennzeichnet,**
- daß zur Herstellung der einen mittleren Durchmesser kleiner als 1 µm aufweisenden Körner (1) aus einer Dispersion (3) Hohlräume (4) aufweisende biochemische Hohlkörper gebildet werden, die einen bekannten mittleren Innendurchmessers ihres jeweiligen Hohlraumes (4) aufweisen, der kleiner als 1 µm ist, wobei bei über 60% der Hohlkörper der Innendurchmesser um maximal 40% von ihrem statistischen Mittelwert abweicht,
- daß der Dispersion (3) Salze beigegeben werden, die in der Dispersion (3) unter Bildung von Gerüstionen gelöst werden, wobei das Gerüstion ein Ion eines für das Gerüstmaterial benötigten Elements oder einer entsprechenden Verbindung ist,
- daß in den geschlossenen Hohlraum (4) der dispergierten Hohlkörper Gerüstionen eingebracht werden,
- daß mit den im Hohlraum (4) der Hohlkörper befindlichen Gerüstionen die Körner (1) des Gerüstmaterials oder eines formentsprechenden Vorprodukts gebildet werden, und
- daß die Hüllen (6) der Hohlkörper unter Zurücklassung der jeweils eingeschlossenen Körner (1) des Gerüstmaterials oder der Körner (1) des Vorprodukts entfernt werden.

2. Verfahren nach Anspruch 1,
**dadurch gekennzeichnet,**
daß als Hohlkörper Vesikel (5) gewählt werden, die durch Lösen von amphiphilen, organischen Molekülen (7) in einer Flüssigkeit zu der Dispersion (3) und durch Beschallung der Dispersion (3) mit Ultraschall erzeugt werden.

3. Verfahren nach Anspruch 1,
**dadurch gekennzeichnet,**
daß zur Bildung der Dispersion (3) der Flüssigkeit als Moleküle (7) Lipide und/oder Proteine beigegeben werden.

4. Verfahren nach Anspruch 1,
**dadurch gekennzeichnet,**
daß zur Bildung der Dispersion (3) der Flüssigkeit als Moleküle (7) Phospholipide beigegeben werden.

5. Verfahren nach Anspruch 1,
**dadurch gekennzeichnet,**
daß die Dispersion (3) auf einen pH-Wert ungleich 7 eingestellt wird.

6. Verfahren nach Anspruch 1,
**dadurch gekennzeichnet,**
daß die die Gerüstionen bildenden Salze vor der Bildung der Hohlkörper der Dispersion (3) beigegeben werden.

7. Verfahren nach Anspruch 1,
**dadurch gekennzeichnet,**
daß vor der Bildung der Hohlkörper in der Dispersion (3) Salze gelöst werden, die das Gerüstion als Kation aufweisen.

8. Verfahren nach Anspruch 1,
**dadurch gekennzeichnet,**
daß die Dispersion (3) mit den die Gerüstionen bildenden Salzen gesättigt wird, wobei eine Konzentration größer 0,1 M eingestellt wird.

9. Verfahren nach Anspruch 1,
**dadurch gekennzeichnet,**
daß die Dispersion (3) vor der Bildung der Hohlkörper mit den die Gerüstionen bildenden Salzen gesättigt wird, wobei eine Konzentration größer 0,1 M eingestellt wird.

10. Verfahren nach Anspruch 1,
**dadurch gekennzeichnet,**
- daß vor der Bildung der Hohlkörper der Dispersion (3) Salze beigegeben werden, die das Gerüstion als Kation aufweisen,
- daß nach der Bildung der Hohlkörper der flüssigen Phase, also der außerhalb der Hohlräume (4) der Hohlkörper befindlichen Salzlösung die Gerüstionen entzogen werden,
- daß der weitgehend gerüstionenfreien Salzlösung Anionen beigegeben werden, die durch die Hülle (6) der Hohlkörper permeieren und
- daß bei Vorliegen der Anionen im Hohlraum (4) der Hohlkörper die Präzipitation des Gerüstmaterials oder des Vorprodukts des Gerüstmaterials ausgelöst wird.

11. Verfahren nach Anspruch 1,
**dadurch gekennzeichnet,**
daß nach der Bildung der Körner (1) des Gerüstmaterials die Hüllen (6) der Hohlkörper thermisch von den Körnern (1) des Gerüstmaterials oder des Vorproduktes entfernt werden.

12. Verfahren nach Anspruch 1,
**dadurch gekennzeichnet,**
daß bei Vorliegen eines Vorprodukts nach der Bildung der Körner (1) des Vorprodukts die Hüllen (6) der Hohlkörper thermisch von den Körnern (1) entfernt und das Vorprodukt zu dem Gerüstmaterial, insbesondere gleichzeitig mit der Entfernung der Hüllen (6) calziniert wird.

13. Verfahren nach Anspruch 1,
**dadurch gekennzeichnet,**
daß die zur Bildung der Hohlkörper eingesetzten Moleküle (7) jeweils eine elektrisch leitfähige Substanz (13) enthalten, welche Substanz (13) bei der Entfernung der Hüllen (6) der Hohlkörper von den Körnern (1) des Gerüstmaterials oder des Vorproduktes an der Oberfläche der Körner (1) verbleibt, wobei die verbleibende Substanz (13) gegenüber dem Gerüstmaterial eine höhere elektrische Leitfähigkeit aufweist.

14. Verfahren nach Anspruch 1,
**dadurch gekennzeichnet,**
daß als biochemikalische Hohlkörper Micellen, Mikroemulsionen, Ferritin oder dgl., insbesondere Vesikel gewählt werden.

15. Verfahren nach Anspruch 1,
**dadurch gekennzeichnet,**
daß als biochemische Hohlkörper Micellen, Mikroemulsionen, Ferritin oder dgl., insbesondere Vesikel (5) gewählt werden.

16. Verfahren nach Anspruch 1,
**dadurch gekennzeichnet,**
daß die Hüllen (6) der Hohlkörper mittels eines geeigneten Lösungsmittels entfernt werden.

17. Verwendung eines mit einem Verfahren gemäß Anspruch 1 hergestellten Ladungsaustauschkörpers als Elektrode für eine Einzelzelle eines elektrochemischen Speichers.

18. Verwendung eines mit einem Verfahren gemäß Anspruch 1 hergestellten Ladungsaustauschkörpers als Kathode eines elektrochemischen Speichers.

19. Verwendung eines mit einem Verfahren gemäß Anspruch 1 hergestellten Stützgerüsts gemäß Anspruch 1 als Elektrode für eine vorzugsweise wiederaufladbare Lithium-Batterie, wobei das Gerüstmaterial ein Lithium-Mangan-Spinell (Li2Mn2O4) ist.

20. Verwendung eines mit einem Verfahren gemäß Anspruch 1 hergestellten Ladungsaustauschkörpers als Katalysator.

## Claims

1. A method of producing a charge exchange body, such as electrodes or catalysts, with a larger active surface than the outer surface of the charge exchange member, during which method grains of a framework material suitable for forming a supporting framework are produced and combined to form the supporting structure, characterised in that
- in order to produce from a dispersion (3) the grains (1) which have a mean diameter smaller than 1 µm, biochemical hollow bodies comprising cavities (4) are formed which have a known mean inside diameter of their respective cavity (4), which is smaller than 1 µm, whereby, in the case of over 60% of the hollow bodies, the inside diameter diverges from their statistical mean by a maximum of 40%,
- and in that added to the dispersion (3) are salts which are dissolved in the dispersion (3) to form framework ions, the framework ion being an element or a corresponding compound required for the framework material,
- and in that framework ions are incorporated into the closed cavity (4) of the dispersed hollow bodies,
- and in that the grains (1) of the framework material or of a correspondingly formed preliminary product are formed with the framework ions dispersed in the cavity (4) in the hollow body, and
- in that the covers (6) of the hollow bodies are removed, leaving behind the respectively enclosed grains (1) of framework material or grains (1) of the preliminary product.

2. A method according to claim 1, characterised in that the selected hollow bodies are vesicles (5) which are produced by dissolving amphilic organic molecules (7) in a liquid to produce the dispersion (3) and by bombarding the dispersion (3) with ultrasound.

3. A method according to claim 1, characterised in that in order to form the dispersion (3) lipids and/or proteins are added to the liquid as molecules (7).

4. A method according to claim 1, characterised in that to form the dispersion (3), phospholipids are added to the liquid as molecules (7).

5. A method according to claim 1, characterised in that the dispersion (3) is adjusted to a pH other than 7.

6. A method according to claim 1, characterised in that the salts forming the frame-work ions are added to the dispersion (3) prior to formation of the hollow bodies.

7. A method according to claim 1, characterised in that prior to formation of the hollow bodies, salts comprising the framework ion as a cation are dissolved in the dispersion (3).

8. A method according to claim 1, characterised in that the dispersion (3) is saturated with the salts forming the framework ions, a concentration greater than 0.1 M being adjusted.

9. A method according to claim 1, characterised in that prior to formation of the hollow bodies, the dispersion (3) is saturated with salts which form the framework ions, a concentration greater than 0.1 M being adjusted.

10. A method according to claim 1, characterised in that
- prior to formation of the hollow bodies, salts are added to the dispersion (3) which comprise the framework ion as a cation,
- and in that following formation of the hollow bodies the framework ions are eliminated from the liquid phase, in other words the salt solution which is disposed outside the cavities (4) of the hollow bodies,
- and in that anions which permeate through the casing (3) of the hollow bodies are added to the salt solution which is largely free from framework ions,
- and in that when anions are present in the cavity (4) in the hollow bodies, precipitation of the framework material or of the preliminary products of the framework material is triggered.

11. A method according to claim 1, characterised in that after formation of the grains (1) of the framework material the casings (6) of the hollow bodies are thermally removed from the grains (1) of framework material or of preliminary product.

12. A method according to claim 1, characterised in that if a preliminary product is present, then following formation of grains (1) of preliminary product, the casings (6) of the hollow bodies are thermally removed from the casings (1) and the preliminary product is calcined to the framework material, particularly simultaneously with removal of the casings (6).

13. A method according to claim 1, characterised in that the molecules (7) used for forming the hollow bodies respectively contain an electrically conductive substance (13), which substance (13) remains on the surface of the grains (1) upon removal of the casings (6) of the hollow bodies of the grains (1) of framework material or preliminary product, the remaining substance (13) exhibiting a higher level of electrical conductivity than the framework materiaL

14. A method according to claim 1, characterised in that micellae, microemulsions, ferritin or the like, particularly vesicles, are chosen as the biochemical hollow bodies.

15. A method according to claim 1, characterised in that micellae, microemulsions, ferritin or the like, particularly vesicles (5), are chosen as the biochemical hollow bodies.

16. A method according to claim 1, characterised in that the casings (6) of the hollow bodies are removed by means of a suitable solvent.

17. Use of a charge exchange body produced by a method according to claim 1 as an electrode for a single cell of an electrochemical storage means.

18. Use of a charge exchange body produced by a method according to claim 1 as a cathode of an electrochemical storage means.

19. Use ofa supporting framework according to claim 1 produced by a method according to claim 1 as an electrode for a preferably rechargeable lithium battery, the framework material being a lithium-manganese-spinel (Li2Mn204).

20. Use of a charge exchange body produced by a method according to claim 1 as a catalyst.

## Revendications

1. Procédé de fabrication d'un corps échangeur de charge, tel que des électrodes ou catalyseurs, qui possède une surface active plus grande que la surface extérieure du corps échangeur de charge, dans lequel procédé on produit des grains faits d'un matériau d'ossature approprié pour la formation d'une ossature porteuse et on les assemble pour constituer l'ossature porteuse,
caractérisé
- en ce que, pour la production des grains (1) présentant un diamètre moyen inférieur à 1 µm, on forme à partir d'une dispersion (3), des corps creux biochimiques présentant des cavités (4) qui présentent un diamètre intérieur moyen connu des cavités (4) qui est inférieur à 1 µm, cependant que, sur plus de 60 % des corps creux, le diamètre extérieur s'écarte de sa moyenne statistique de 40 % au maximum,
- en ce qu'on ajoute à la dispersion (3) des sels qui se dissolvent dans la dispersion (3) en formant des ions d'ossature, l'ion d'ossature étant un ion d'un élément nécessaire pour le matériau d'ossature ou d'un composé correspondant,
- en ce qu'on introduit des ions d'ossature dans la cavité fermée (4) des corps creux dispersés,
- en ce qu'avec les ions d'ossature contenus dans la cavité (4) des corps creux, on forme les grains (1) du matériau d'ossature ou d'un précurseur d'une forme correspondante, et
- en ce qu'on élimine les enveloppes (6) des corps creux, en conservant les grains (1) du matériau d'ossature ou les grains (1) du précurseur qui y étaient enfermés.

2. Procédé selon la revendication 1,
caractérisé
en ce qu'on choisit comme corps creux des vésicules (5) qui sont produites par dissolution de molécules organiques amphiphiles (7) dans un liquide pour former la dispersion (3) et par irradiation de la dispersion (3) par des ultrasons.

3. Procédé selon la revendication 1,
caractérisé
en ce que, pour la formation de la dispersion (3), on ajoute au liquide des lipides et/ou des protéines en qualité de molécule (7).

4. Procédé selon la revendication 1,
caractérisé
en ce que, pour la formation de la dispersion (3), on ajoute au liquide des phospholipides en qualité de molécule (7).

5. Procédé selon la revendication 1,
caractérisé
en ce qu'on ajuste la dispersion (3) sur une valeur de pH différente de 7.

6. Procédé selon la revendication 1,
caractérisé
en ce que les sels qui forment les ions d'ossature sont ajoutés à la dispersion (3) avant la formation des corps creux.

7. Procédé selon la revendication 1,
caractérisé
en ce qu'avant la formation des corps creux dans la dispersion (3), on dissout des sels qui contiennent l'ion d'ossature sous la forme d'un cation.

8. Procédé selon la revendication 1,
caractérisé
en ce qu'avant la formation des corps creux, on dissout dans la dispersion (3) des sels qui contiennent l'ion d'ossature sous la forme d'un cation.

9. Procédé selon la revendication 1,
caractérisé en ce qu'avant la formation des corps creux, on sature la dispersion (3) avec les sels formant les ions d'ossature, et on établit alors une concentration supérieure à 0,1 M.

10. Procédé selon la revendication 1,
caractérisé
- en ce qu'avant la formation du corps creux, on ajoute à la dispersion (3) des sels qui contiennent l'ion d'ossature sous la forme d'un cation,
- en ce qu'après la formation des corps creux, on extrait les ions d'ossature de la phase liquide, c'est-à-dire de la solution saline qui se trouve à l'extérieur des cavités (4) des corps creux,
- en ce qu'on ajoute à la solution saline largement exempte d'ions d'ossature des anions qui traversent l'enveloppe (6) des corps creux et
- en ce que, lorsque les anions sont présents dans la cavité (4) des corps creux, on déclenche la précipitation du matériau d'ossature ou du précurseur du matériau d'ossature.

11. Procédé selon la revendication 1,
caractérisé
en ce qu'après la formation des grains (1) du matériau d'ossature, on élimine les enveloppes (6) des corps creux des grains (1) du matériau d'ossature ou du précurseur par voie thermique.

12. Procédé selon la revendication 1,
caractérisé
en ce qu'en présence d'un précurseur, après la formation des grains (1) du précurseur, on élimine les enveloppes (6) des corps creux des grains (1) par voie thermique et on calcine le précurseur pour le transformer en matériau d'ossature, en particulier simultanément avec l'élimination des enveloppes (6).

13. Procédé selon la revendication 1,
caractérisé
en ce que les molécules (7) mises en oeuvre pour la formation des corps creux contiennent une substance (13) conductrice de l'électricité, laquelle substance (13) subsiste sur la surface des grains (1) lorsqu'on élimine les enveloppes (6) des corps creux des grains (1) du matériau d'ossature ou du précurseur, la substance (13) subsistante présentant une plus haute conductibilité électrique que le matériau d'ossature.

14. Procédé selon la revendication 1,
caractérisé
en ce qu'on choisit, en tant que corps creux de produits biochimiques, des micelles, de micro-émulsions, de la ferritine, ou analogues, en particulier des vésicules.

15. Procédé selon la revendication 1, caractérisé en ce qu'on choisit comme corps creux biochimiques des micelles, des micro-émulsions, de la ferritine ou analogues, en particulier des vésicules (5).

16. Procédé selon la revendication 1,
caractérisé
en ce qu'on élimine les enveloppes (6) des corps creux au moyen d'un solvant approprié.

17. Emploi d'un corps échangeur de charge produit par un procédé selon la revendication 1 en tant qu'électrode pour une cellule élémentaire d'un accumulateur électrochimique.

18. Emploi d'un corps échangeur de charge produit par un procédé selon la revendication 1 en tant que cathode d'un accumulateur électrochimique.

19. Emploi d'une ossature porteuse selon la revendication 1, fabriquée selon un procédé selon la revendication 1 en tant qu'électrode pour une pile au lithium, de préférence rechargeable, le matériau d'ossature étant un spinelle de lithium-manganèse (Li2Mn2O4).

20. Emploi d'un corps échangeur de charge fabriqué par un procédé selon la revendication 1 en qualité de catalyseur.
